# EUROPÄISCHE PATENTANMELDUNG

(11) **EP 2 514 615 A1**
(43) Veröffentlichungstag der Anmeldung: **24.10.2012**
(21) Anmeldenummer: 12150814.7
(22) Anmeldetag: 11.01.2012
(51) Int. Cl.: B60C 27/12, B60C 27/18, B60C 27/10, B60C 27/06

(54) **Reifenkette mit Haltemittel und Abrollkörper**

(30) Priorität: 19.04.2011 DE 202011000938 U
(71) Anmelder: RUD Ketten Rieger & Dietz GmbH u. Co. KG, 73432 Aalen (DE)
(72) Erfinder: Grimm, Anton, 73479 Ellwangen (DE); Schmidle, Reinhold, 73432 Aalen (DE)
(74) Vertreter: Grünecker, Kinkeldey, Stockmair & Schwanhäusser

(57) **Zusammenfassung**

Die Erfindung betrifft eine Reifenkette (1) für einen Fahrzeugreifen (2), mit einem im Wesentlichen ringförmig aufspannbaren Traktionsabschnitt (3), der einer Lauffläche (4) des Fahrzeugreifens (2) zugeordnet ist, und mit wenigstens einem sich in einer axialen Richtung (A) an den Traktionsabschnitt (3) anschließenden Halteabschnitt (6), der einer Flanke (5) des Fahrzeugreifens (2) zugeordnet ist und wenigstens ein zugmittelförmiges Haltemittel (8) aufweist. Um die Montage von Reifenketten mit den eingangs genannten Merkmalen zu vereinfachen, ist erfindungsgemäß vorgesehen, dass auf dem Haltemittel (8) wenigstens ein Abrollkörper (10) drehbar um eine Längsrichtung (L) des Haltemittels (8) gehalten ist, der im montierten Zustand der Reifenkette (1) in Rollkontakt mit der Flanke (5) steht.

## Beschreibung

Die Erfindung betrifft eine Reifenkette für einen Fahrzeugreifen mit einem im Wesentlichen ringförmig aufspannbaren Traktionsabschnitt, der einer Lauffläche des Fahrzeugreifens zugeordnet ist, und mit wenigstens einem sich in einer axialen Richtung an den Traktionsabschnitt anschließenden Halteabschnitt, der einer Flanke des Fahrzeugreifens zugeordnet ist und wenigstens ein zugmittelförmiges Haltemittel aufweist.

Derartige Reifenketten sind bekannt und finden beispielsweise als Gleitschutzketten oder - vorrichtungen, insbesondere als Schneeketten, oder als Reifenschutzketten Anwendung. Ist die Reifenkette auf dem Fahrzeugreifen montiert, so liegt der Traktionsabschnitt auf der Lauffläche des Fahrzeugreifens auf. Der Traktionsabschnitt dient bei Gleitschutzketten dazu, die Traktion auf rutschigen Untergründen, wie Morast, Matsch, Schnee und/oder Eis, zu erhöhen. Bei Reifenschutzketten schützt der Traktionsabschnitt die Lauffläche vor Beschädigung durch beispielsweise scharfkantige und/oder heiße Gegenstände und stellt gleichzeitig eine ausreichende Traktion zur Verfügung. Der Traktionsabschnitt kann Kettenstränge oder einzelne Ketten-und/oder Stegglieder aufweisen, die im montierten Zustand auf der Lauffläche aufliegen. Die Ketten- oder Stegglieder und hieraus gebildete Kettenstränge des Traktionsabschnittes können zu einem Laufnetz verbunden sein. Der Traktionsabschnitt kann aber auch textile Materialien aufweisen und bei bestimmten Arten von Schneeketten, den sogenannten Socken, einen ausschließlich textilen Mantel umfassen.

Damit sich der Traktionsabschnitt eng an die Lauffläche anlegt, lässt er sich ringförmig aufspannen. Seitlich, also in axialer Richtung, d.h. in Richtung der Drehachse des Fahrzeugreifens, schließt sich an wenigstens einer Seite des Traktionsabschnittes ein Halteabschnitt an, der im montierten Zustand der Reifenkette an der Flanke des Fahrzeugreifens anliegt. Der Halteabschnitt verhindert, dass die Reifenkette im Betrieb vom Fahrzeugreifen seitlich abfällt. Der Halteabschnitt weist ein Haltemittel auf, das zugmittelförmig ausgestaltet ist. Das Haltemittel kann gleichzeitig als Spannmittel in Form beispielsweise einer Spannkette, eines Spanngurtes, -riemens, -seiles oder -bügels dienen, um den Halteabschnitt in radialer Richtung zusammenzuziehen und dabei den Traktionsabschnitt zu fixieren und über die Lauffläche zu spannen. Das Haltemittel kann auch zumindest abschnittsweise elastisch dehnbar sein, so dass es den Halteabschnitt und den Traktionsabschnitt durch Federkraft spannt. Das Haltemittel kann ferner Teil einer mechanischen Spannvorrichtung, beispielsweise einer Winde oder Ratsche sein.

Die Montage vieler Reifenketten ist trotz einer Vielzahl von konstruktiven Bemühungen auf Seiten der Entwickler nach wie vor kompliziert, vor allem, wenn sie unter widrigen Umweltbedingungen vorgenommen werden muss und die Bedienperson beispielsweise Handschuhe trägt.

Die Erfindung setzt sich daher zum Ziel, die Montage von Reifenketten mit den eingangs genannten Merkmalen zu vereinfachen.

Diese Aufgabe wird erfindungsgemäß für eine Reifenkette der eingangs genannten Art dadurch gelöst, dass auf dem Haltemittel wenigstens ein Abrollkörper drehbar um die Längsrichtung des Haltemittels gehalten ist, der im montierten Zustand der Reifenkette in Rollkontakt mit der Reifenkette steht.

Mit dieser einfachen Lösung ist es möglich, den Halteabschnitt einfacher und bequemer über die Lauffläche auf die dem Fahrzeug zugewandte Innenseite des Reifens zu schieben, ohne dass sich beim Überstreifen des Halteabschnitts über die Lauffläche der Halteabschnitt im Reifenprofil verfängt. Durch den verdickten Abrollkörper ist die Dicke des Halteabschnitts erhöht, so dass er nicht mehr so leicht in Profilrillen bzw. an Profilstollen des Fahrzeugreifens hängen bleiben kann. Die Drehbarkeit des Abrollkörpers gegenüber dem Halteabschnitt erleichtert es, den Halteabschnitt über die Lauffläche zu schieben und über die Profilrillen bzw. Profilstollen zu bewegen, da der Halteabschnitt mit Hilfe der Abrollkörper beim Aufziehen der Reifenkette auf der Lauffläche des Fahrzeugreifens abrollen kann.

Aufgrund des Rollkontakts zwischen Abrollkörper und Reifenflanke kann sich der Halteabschnitt leicht gegenüber der Reifenkette bewegen. Der Halteabschnitt kann sich somit nach dem Aufziehen der Kette schneller zentrieren und Laständerungen leichter folgen.

Die erfindungsgemäße Lösung kann durch die folgenden, jeweils für sich vorteilhaften und voneinander unabhängigen Ausgestaltungen weiter verbessert werden.

Ferner kann wenigstens ein Abrollkörper, oder eine Vielzahl von auf dem Haltemittel nebeneinander angeordneten Abrollkörpern, einen Abstandhalter zwischen zwei in Längsrichtung des Haltemittels, oder einem anderen Teil des Halteabschnitts, beabstandeten Halterungen, über die das Haltemittel wenigstens mittelbar mit dem Traktionsabschnitt verbunden ist, bilden. Diese Ausgestaltung bietet den Vorteil, dass die beiden Halterungen, über die bei der montierten Reifenkette die Halte- und Zugkräfte des Haltemittels an den Traktionsabschnitt geleitet sind, durch den Abstandshalter stets im exakt oder wenigstens nahezu richtigen Abstand für die Montage zueinander positioniert werden. Folglich müssen bei der Montage der Schneekette die Halterungen nicht mehr von Hand entlang des Haltemittels an die richtige Stelle geschoben werden.

Gemäß einer weiteren vorteilhaften Ausgestaltung sind zwischen zwei in Längsrichtung des Haltemittels beabstandeten Halterungen wenigstens zwei Abrollkörper in Längsrichtung des Haltemittels aneinandergereiht. Diese Ausgestaltung ermöglicht es, über die Anzahl der aneinandergereihten Abrollkörper unterschiedliche Abstände zwischen den Halterungen einzustellen und so die Reifenkette an unterschiedliche Größen von Fahrzeugreifen anzupassen. Ferner können je nach Anwendung unterschiedliche Kombinationen von unterschiedlich ausgestalteten Abrollkörpern verwendet werden, beispielsweise kann der Durchmesser der Abrollkörper zu den Halterungen hin abnehmen.

Vorteilhaft sind einzelne Abrollkörper gegeneinander bzw. unabhängig voneinander beweglich. Die Beweglichkeit der Abrollkörper gegeneinander erschwert das Verhaken des Haltemittels in den Profilrillen oder an den Reifenstollen und erleichtert das Aufziehen der Reifenkette. Die Abrollkörper können insbesondere unabhängig voneinander drehbar sein und sich so bei einem Verhaken des Haltemittels unabhängig voneinander in entgegengesetzte Richtungen frei drehen.

Gemäß einer weiteren vorteilhaften Ausgestaltung sind wenigstens einzelne Abrollkörper gegeneinander kippbar am Haltemittel angeordnet. Bei dieser Ausgestaltung entstehen einzelne, gegeneinander kippbare Segmente, die selbst bei einem unflexiblen Haltemittel eine flexible bzw. nachgiebige äußere Hülle schaffen. Bei einem bereits flexiblen Haltemittel bleibt bei dieser Ausgestaltung dessen Flexibilität erhalten.

Um beispielsweise der Krümmung des Haltemittels und/oder einer Dehnung des Haltemittels folgen zu können, können wenigstens einzelne Abrollkörper voneinander weg beweglich bzw. verschieblich sein.

Die Abrollkörper können kugelförmig, hülsen- oder schlauchförmig ausgestaltet sein.

Die Abrollkörper sind vorzugsweise nur an dem inneren, im montierten Zustand dem Fahrzeug zugewandten Halteabschnitt vorgesehen, da nur dieser bei der Montage über die Lauffläche geschoben werden muss.

Das Haltemittel kann durch eine durchgängige, beispielsweise zentrale Öffnung des wenigstens einen Abrollkörpers durchgesteckt sein. Die Öffnung kann eine lichte Weite aufweisen, die größer als der Durchmesser des Haltemittels ist.

Das Haltemittel selbst kann aus einem oder mehreren elastischen Seilen bestehen.

Die Gesamtlänge in Umfangsrichtung der auf das Haltemittel aufgereihten Abrollkörper kann in einer weiteren vorteilhaften Ausgestaltung größer als die Länge des Haltemittels in Umfangrichtung sein. Wird das Haltemittel geschlossen, so muss es bei dieser Ausgestaltung gedehnt werden und erzeugt so automatisch eine Vorspannkraft, durch die die Reifenkette selbsttätig zentriert wird.

Im Folgenden ist die Erfindung anhand von verschiedenen Ausführungsformen mit Bezug auf die Zeichnungen beispielhaft erläutert. Die im Zusammenhang mit der jeweiligen Ausführungsform beschriebenen Merkmale können nach Maßgabe der obigen Ausführungen beliebig abgeändert, weggelassen oder mit einem oder mehreren Merkmalen der anderen Ausführungsformen kombiniert werden, sollte es für einen bestimmten Anwendungsfall nicht auf den mit einem Merkmal verbundenen Vorteil ankommen.

Es zeigen:
- Fig. 1: zeigt eine schematische Perspektivdarstellung einer ersten Ausführungsform einer erfindungsgemäßen Reifenkette beim Aufziehen auf einen Reifen;
- Fig. 2: eine schematische Perspektivdarstellung der Ausführungsform der Fig. 1 im montierten Zustand;
- Fig. 3: eine schematische Perspektivdarstellung einer weiteren Ausführungsform der erfindungsgemäßen Reifenkette.

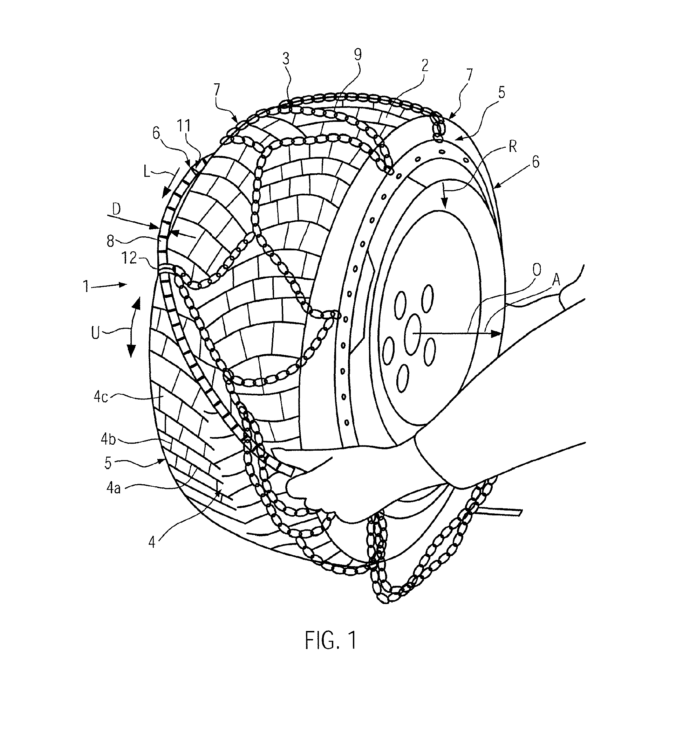

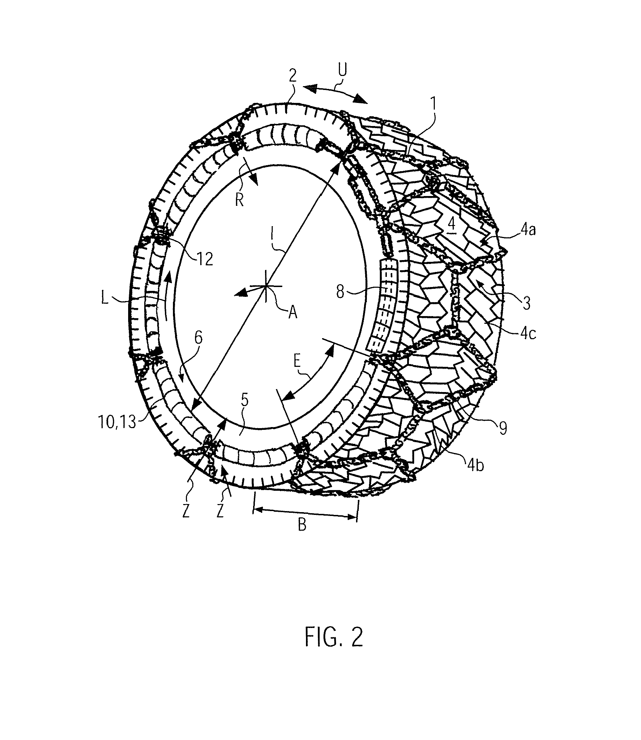

Zunächst wird die Erfindung beispielhaft mit Bezug auf die Ausführungsform der Fig. 1 und 2 beschrieben. Fig. 1 zeigt eine Reifenkette 1, die gerade auf einen Fahrzeugreifen 2 montiert wird.

Ein Traktionsabschnitt 3 der Reifenkette ist einer Lauffläche 4 des Fahrzeugreifens zugeordnet und kommt im montierten Zustand auf dieser zu liegen. In Fig. 1 liegt der Traktionsabschnitt 3 bereits auf der oberen Hälfte des Fahrzeugreifens 2 auf der Lauffläche 4 auf. Der Traktionsabschnitt lässt sich im Wesentlichen ringförmig aufspannen, so dass er um die Lauffläche 4 gelegt werden kann. Vorzugsweise erstreckt sich der Traktionsabschnitt 3 über die gesamte Breite der Lauffläche 4. Die Lauffläche 4 ist überlicherweise mit einem Profil 4a mit Profilrillen 4b und Profilstollen 4c versehen.

Den Reifenflanken 5 des Fahrzeugreifens 2 ist ein innerer Halteabschnitt 6 und ein äußerer Halteabschnitt 6a der Reifenkette 1 zugeordnet. Fig. 1 zeigt den äußeren Halteabschnitt 6a, der sich in axialer Richtung A im Bereich einer Reifenschulter 7, am Übergang zwischen der Lauffläche 4 und der Reifenflanke 5, an den Traktionsabschnitt 3 anschließt. Der äußere Halteabschnitt 6a befindet sich in radialer Richtung R vom Traktionsabschnitt nach innen versetzt in Richtung einer Drehachse O und fixiert den Traktionsabschnitt 3.

Der innere Halteabschnitt 6 weist ein zugmittelförmiges Haltemittel 8, hier in Form eines Drahtbügels, auf, das zum Festspannen und -zurren des inneren Halteabschnittes 6 und des Traktionsabschnittes 3 dient. Der Halteabschnitt 6 liegt im montierten Zustand an der inneren Reifenflanke 5 des Fahrzeugreifens 2 an. Das Haltemittel 8 erstreckt sich in einer Umfangrichtung U, also in Umfangrichtung des ringförmig aufgespannten Haltemittels. Durch Festzurren des Haltemittels 8 verringert sich der Innendurchmesser I des Halteabschnittes, so dass sich der Halteabschnitt 6 zusammenzieht und eine in radialer Richtung R nach innen wirkende Zugkraft Z auf den Traktionsabschnitt 3 ausübt. Die Zugkraft Z spannt den Traktionsabschnitt 3 über die Lauffläche 4. Bevor jedoch der innere Halteabschnitt 6 gespannt werden kann, muss er von außen über die Lauffläche 4 zur inneren Reifenflanke 5 geschoben werden, wie Fig. 1 zeigt.

Lediglich beispielhaft ist in der Fig. 1 gezeigt, dass der Traktionsabschnitt 3 und der Halteabschnitt 6 netzförmig aus Kettensträngen 9 aufgebaut sind.

Die beiden Halteabschnitte 6, 6a an der Innen- und der Außenseite des Fahrzeugreifens 2 verhindern, dass sich im Betrieb die Reifenkette 1, beispielsweise bei einer Kurvenfahrt, in axialer Richtung A vom Fahrzeugreifen 2 seitlich abfällt.

In der Praxis ist der Halteabschnitt 6 an der in Fig. 2 dargestellten Innenseite des Fahrzeugreifens 2 schwer zu montieren, da zwischen der Karosserie und der inneren Reifenflanke 5 nur wenig Platz ist und die Reifenkette 1 somit vom Benutzer durch den verfügbaren Spalt zwischen Reifen und Karosserie geschoben werden muss. Beim Überziehen des Haltemittels 8 (Fig. 1) über die Lauffläche 4 kann sich dieses leicht im Profil 4a, beispielsweise dessen Profilrillen 4b und/oder Profilstollen 4c verhaken.

Um das Verhaken zu verhindern, ist der Halteabschnitt 6 mit wenigstens einem drehbaren Abrollkörper 10 versehen. Wie Fig. 1 und 2 zeigen, ist der wenigstens eine Abrollkörper 10 insbesondere auf dem Haltemittel 8 gegenüber diesem drehbar gehalten. Der Abrollkörper 10 erleichtert das Überstreifen des Haltemittels 8 über die Lauffläche 4. Dies kann auf einfache Weise dadurch erfolgen, dass das Haltemittel 8 durch eine Durchgangsöffnung 11 des Abrollkörpers mit Spiel geführt ist.

In Fig. 2 sind lediglich beispielhaft mehrer auf dem Haltemittel 8 aufgereihte Abrollkörpern 10. Die Abrollkörper 10 einer Reifenkette können alle gleich oder unterschiedlich ausgestaltet sein; sie können auch kugelförmig und/oder schlauchförmig ausgestaltet sein.

Sind mehrere Abrollkörper 10 auf dem Haltemittel 8 aneinandergereiht, so können diese unabhängig voneinander drehbar und/oder gegeneinander kippbar sein. Durch die gegenseitige Auslenkbarkeit bleibt die Biegsamkeit des Haltemittels 8 erhalten. Eine unabhängige Drehbarkeit ermöglicht unterschiedliche Drehungen der Abrollkörper zueinander, was das Überziehen des Haltemittels 8 über die Lauffläche 4 erleichtert. Sind die Abrollkörper 10 auf dem Haltemittel 8 längsverschieblich, so können sie einer Verformung des Haltemittels 8 leichter folgen. Die Abrollkörper 10 können auch eine flexible Hülle auf dem Haltemittel 8 bilden, indem sie auf dem Haltemittel kippbar, vorzugsweise unabhängig voneinander kippbar, angebracht sind.

Wie Fig. 1 und 2 zeigen, sind in einer Längsrichtung L des Haltemittels 8 beabstandet voneinander Halterungen 12 vorgesehen, über die das Haltemittel 8 mit dem Traktionsabschnitt 3 verbunden ist.

Das Haltemittel 8 kann von den Halterungen 12 längsverschieblich gehalten sein. Dies ist beispielsweise der Fall, wenn das Haltemittel 8 durch ösen-, haken- oder ringförmige Halterungen 12 gesteckt ist. Das Haltemittel 8 kann jedoch auch unverschieblich mit den Halterungen 12 verbunden sein.

Um bei gegeneinander verschieblichen Halterungen und Haltemittel den Abstand zwischen zwei Halterungen festzulegen, kann eine Mehrzahl von Abrollkörpern 10 als Abstandshalter 13 dienen, der den Abstand zwischen zwei benachbarten Halterungen 12 festlegt. Insbesondere bei einer Mehrzahl von zwischen zwei Halterungen angeordneten Abrollkörpern 10 kann der Abstand durch die Anzahl und/oder Größe der zwischen zwei Halterungen angeordneten Abrollkörper 10 einfach an die Größe des Fahrzeugreifens angepasst werden. Selbstverständlich kann jedoch auch ein einzelner langgestreckter Abrollkörper 10 zwischen den Halterungen 12 als Abstandshalter vorgesehen sein. Die Abrollkörper sind gegenüber dem sie haltenden Halteabschnitt 6 oder dem Haltemittel 8 verdickt, sie stellen also Verdickungen dar. Die Dicke D kann in Richtung zu den Halterungen 12 abnehmen, weil an diesen Stellen die Gefahr eines Verhakens mit dem Reifenprofil geringer ist.

Ist die Reifenkette 1 montiert, liegen die Abrollkörper 10 auf der Reifenflanke 5 auf. Sie stehen dabei in Rollkontakt mit der Reifenflanke 5, so dass sich das Haltemittel 8 durch eine Bewegung auf der Reifenflanke 5 selbst zentrieren kann, ohne dass hierzu große Kräfte notwendig sind. Änderungen der um den Reifenumfang auf das Haltemittel 8 wirkenden Kräfte kann das Haltemittel 8 aufgrund der Abrollbewegung der Abrollkörper 10 auf der Reifenflanke leicht folgen.

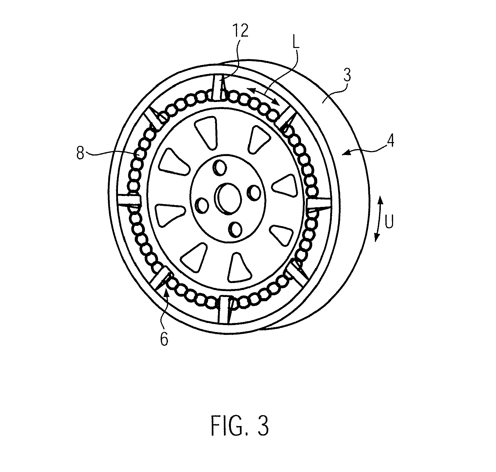

In Fig. 3 ist die Innenseite einer weiteren erfindungsgemäßen Reifenkette 1 in einem auf einem Fahrzeugreifen 2 montierten Zustand gezeigt. Für konstruktiv oder funktionell gleiche Elemente werden die Bezugszeichen der Ausführungsform von Fig. 1 und 2 verwendet.

Bei der Ausführungsform der Fig. 3 ist der Traktionsabschnitt 3 der Reifenkette 1 als ein auf die Lauffläche 4 des Fahrzeugreifens 2 gelegter textiler Mantel ausgebildet. In den textilen Mantel können auch Einlagen oder Fäden aus anderen Materialien enthalten sein, wie beispielsweise Einlagen oder Filamente aus oder enthaltend Metall oder Stahl, um die Traktion und die Verschleißfestigkeit zu verbessern.

Der Halteabschnitt 6 weist radial nach innen reichende Schlaufen als Halterungen 12 auf. Lediglich beispielhaft ist bei dieser Ausführungsform das Haltemittel 8 als ein ringförmig geschlossenes, elastisch weitbares Spannseil oder als ein Spanngurt mit entsprechenden Eigenschaften ausgestaltet. Das Haltemittel 8 wird zum Überziehen über den Reifen 2 elastisch geweitet und zieht sich dann an der Innenseite des Reifens selbsttätig zusammen, um den Traktionsabschnitt über die Lauffläche 4 zu spannen. Zum Zusammenlegen der Reifenkette wird diese einfach gefaltet.

Das Haltemittel 8 ist auch bei dieser Ausführungsform mit Abrollkörpern 10 versehen, die kugelförmig oder hülsenförmig ausgestaltet sein können. Die Abrollkörper 10 sind gegenüber dem Haltemittel 8 unabhängig beweglich und legen vorzugsweise den Abstand zwischen zwei in Umfangsrichtung U bzw. Längsrichtung L des Haltemittels aufeinanderfolgenden Halterungen 12 fest.

Durch den Rollkontakt der Abrollkörper 10 mit der Reifenflanke 5 kann das Haltemittel 8 sich im montierten Zustand über der Reifenflanke 5 bewegen, so dass die Kräfte im Haltemittel 8 optimal verteilt sind.

Durch die Aneinanderreihung mehrerer separater Abrollkörper 10 und deren unabhängiger Beweglichkeit ergibt sich ein segmentartiger Aufbau, der die hohe Biegsamkeit und Dehnbarkeit des hier elastischen und flexiblen Haltemittels 8 beibehält und ein geringes Staumaß der sich nicht im Betrieb befindlichen Reifenkette 1 ermöglicht.

Die Gesamtlänge der aneinandergereihten Abrollkörper 10 in Umfangsrichtung kann größer sein als die Länge des Haltemittels in ungespannten Zustand. Beim Schließen des Haltemittels in Umfangsrichtung des Reifens ergibt sich so automatisch eine Vorspannkraft, welche die Reifenkette zentriert. In die Gesamtlänge des Abrollkörpers 10 kann die Länge von zwischen den Abrollkörpern angebrachten Halterungen 12 berücksichtigt sein.

Bei den oben beschriebenen Ausführungsformen sind auch weitere Modifikationen denkbar. Beispielsweise können die Abrollkörper 10 auch an anderen Teilen des Halteabschnittes 6, die im montierten Zustand im Bereich der inneren Reifenschulter 5 oder der Felge zu liegen kommen, angebracht sein, um auch deren Überziehen über die Lauffläche zu erleichtern.

## Patentansprüche

1. Reifenkette (1) für einen Fahrzeugreifen (2), mit einem im Wesentlichen ringförmig aufspannbaren Traktionsabschnitt (3), der einer Lauffläche (4) des Fahrzeugreifens (2) zugeordnet ist, und mit wenigstens einem sich in einer axialen Richtung (A) an den Traktionsabschnitt (3) anschließenden Halteabschnitt (6), der einer Flanke (5) des Fahrzeugreifens (2) zugeordnet ist und wenigstens ein zugmittelförmiges Haltemittel (8) aufweist, **dadurch gekennzeichnet, dass** auf dem Haltemittel (8) wenigstens ein Abrollkörper (10) drehbar um eine Längsrichtung (L) des Haltemittels (8) gehalten ist, der im montierten Zustand der Reifenkette (1) in Rollkontakt mit der Flanke (5) steht.

2. Reifenkette (1) nach Anspruch 1, **dadurch gekennzeichnet, dass** wenigstens ein Abrollkörper (10) vorgesehen ist, der einen Abstandshalter (13) zwischen zwei in Längsrichtung (L) des Haltemittels (8) voneinander beabstandeten Halterungen (12), über die das Haltemittel (8) wenigstens mittelbar mit dem Traktionsabschnitt (3) verbunden ist, bildet.

3. Reifenkette (1) nach Anspruch 1 oder 2, **dadurch gekennzeichnet, dass** wenigstens zwei entlang der Längsrichtung (L) des Haltemittels (8) aneinandergereihte Abrollkörper (10) zwischen zwei in Längsrichtung des Haltemittels voneinander beabstandeten Halterungen vorgesehen sind.

4. Reifenkette (1) nach Anspruch 3, **dadurch gekennzeichnet, dass** wenigstens ein Teil der Abrollkörper (10) gegeneinander beweglich auf dem Haltemittel (8) angeordnet ist.

5. Reifenkette (1) nach einem der Ansprüche 1 bis 4, **dadurch gekennzeichnet, dass** wenigstens ein Abrollkörper (10) vorgesehen ist, der kugelförmig ausgestaltet ist.

6. Reifenkette (1) nach einem der Ansprüche 1 bis 5, **dadurch gekennzeichnet, dass** wenigstens ein Abrollkörper (10) vorgesehen ist, der hülsenförmig ausgestaltet ist.

7. Reifenkette (1) nach einem der Ansprüche 1 bis 6, **dadurch gekennzeichnet, dass** eine Vielzahl von Abrollkörpern (10) entlang des Haltemittels (8) angeordnet sind, dass das Haltemittel elastisch dehnbar ausgestaltet ist und dass die Gesamtlänge der Abrollkörper (10) in Umfangsrichtung größer ist als die Länge des Haltemittels (8) in Umfangsrichtung im ungedehnten Zustand.
